# FASCICULE DE BREVET EUROPEEN

(11) **EP 1 345 808 B1**
(45) Date de publication et mention de la délivrance du brevet: **02.05.2007**
(21) Numéro de dépôt: 01995758.8
(22) Date de dépôt: 21.12.2001
(51) Int. Cl.: B62M 9/08, B62M 25/08

(54) **PLATEAU D'ENTRA NEMENT EXTENSIBLE POUR L'ENSEMBLE DE TRANSMISSION D'UNE BICYCLETTE**
AUSFAHRBARES ANTRIEBSKETTENRAD FÜR EINE FAHRRADGETRIEBEANORDNUNG
EXTENSIBLE DRIVING SPROCKET FOR A BICYCLE TRANSMISSION ASSEMBLY

(30) Priorité: 29.12.2000 FR 0017354
(43) Date de publication de la demande: 24.09.2003
(73) Titulaire: Salomon S.A., 74370 Metz-Tessy (FR)
(72) Inventeur: MERCAT, Jean-Pierre, F-74650 Chavanod (FR); CAUVIN, Bertrand, F-01600 Trevoux (FR)
(74) Mandataire: Lejeune, Benoit
(86) Numéro de dépôt international: PCT/FR2001/004155
(87) Numéro de publication internationale: WO 2002/053451

(56) Documents cités:
- EP-A- 0 647 558
- WO-A-83/02925
- FR-A- 2 460 248
- JP-A- 52 115 033
- US-A- 5 772 546

## Description

L'invention concerne un plateau d'entraînement extensible pour l'ensemble de transmission d'une bicyclette.

De tels plateaux extensibles sont connus pour réaliser un changement de vitesse progressif.

Ainsi, le brevet français FR 961 243 décrit un plateau comprenant quatre pignons d'entraînement de la chaîne qui sont extensibles radialement.

Pour ce type de construction, la chaîne suit au niveau du plateau une trajectoire polygonale, avec des variations importantes de distance à l'axe du plateau, qui se répercutent au niveau de l'effort de pédalage.

Le brevet français FR 1 140 134 ou encore FR 1 542 594 décrit un autre mode de construction, selon lequel le plateau comprend non pas des pignons mais des secteurs de couronne extensibles radialement comme défini dans le préambule de la revendication 1.

Le problème de ce type de construction est de gérer les phases transitoires. On conçoit facilement qu'à l'état non étendu les secteurs soient contigus et que dans leurs différents états d'extension, ils laissent entre eux un espace qui est égal à un nombre entier de pas de la chaîne. Mais dans le cas d'une extension radiale, il se pose le problème de gérer l'espace entre deux secteurs contigus lors des phases transitoires, c'est-à-dire au passage des segments à la phase suivante d'extension ou de rétraction.

Un autre défaut de ces constructions connues est qu'elles cherchent à multiplier le nombre des rapports de transmission, c'est-à-dire le nombre de positions d'extension des secteurs. Or plus on écarte les secteurs des plateaux, plus on rencontre de difficultés pour changer les secteurs de position, et plus le phénomène de trajectoire polygonale précédemment évoqué est sensible.

Un autre défaut est que le mécanisme d'extension radiale des segments est situé vers le milieu du secteur. Il supporte directement les contraintes résultant de la tension de la chaîne. D'autre part il est sollicité en porte-à-faux à chaque fois qu'un secteur est engagé partiellement avec la chaîne. A cela s'ajoute le fait que le plateau attaque le brin tendu de la chaîne, c'est-à-dire le brin qui a la contrainte maximale.

Un but de l'invention est de proposer un plateau extensible qui améliore le changement de vitesse.

Un autre but de l'invention est de proposer un plateau extensible où les secteurs travaillent dans de meilleures conditions.

A cet effet, l'invention propose un plateau d'entraînement pour un pédalier de bicyclette comprenant une couronne dentée dont la denture a un pas en correspondance avec un pas de chaîne, la couronne étant divisée en une pluralité de secteurs, les secteurs étant portés par une monture mobile en rotation autour d'un axe de pédalier, chaque secteur du plateau étant mobile relativement à la monture dans un plan perpendiculaire à l'axe de pédalier entre une position basse et une position haute où il est davantage éloigné de l'axe du pédalier définissant ainsi un état de petit diamètre et un état fictif de grand diamètre du plateau, un système de transfert de chaque secteur pour transférer ledit secteur d'une position à l'autre, et un mécanisme d'indexation pour commander le système de basculement des secteurs.

Chaque secteur est monté flottant par rapport à la monture et guidé dans son mouvement de transfert selon une trajectoire comprenant une composante radiale. Le plateau est caractérisé par le fait que le mouvement de transfert de chaque secteur comprend également une composante tangente.

Le système de transfert et le mécanisme d'indexation assurent un changement d'état du plateau entre un état de petit diamètre où l'ensemble des secteurs est en position basse et un état de grand diamètre où tous les secteurs se trouvent en position haute. Le passage d'un état à l'autre se fait en transférant successivement les secteurs d'une position à l'autre au moment de la rotation du plateau où le secteur n'est pas en prise avec la chaîne, c'est-à-dire dans sa phase de remontée.

L'invention est basée sur l'observation suivante. En déplaçant un à un les secteurs selon une trajectoire à la fois radiale et tangente à la montée ou à la descente, il est possible de rester sensiblement en synchronisation avec le pas de la chaîne pour chaque changement d'état du plateau. Le transfert de la chaîne d'un état à l'autre du plateau se fait en maintenant la denture des secteurs en coïncidence avec le pas de la chaîne avec une tolérance acceptable en particulier lors de l'arrivée sous le brin tendu d'un secteur ayant une position basse ou haute différente du secteur qui le précède. Le changement d'état du plateau se fait donc en douceur, sans aucun accrochage ou forcement de la chaîne.

L'invention sera mieux comprise en se référant à la description ci-dessous et aux dessins en annexe qui lui sont attachés.
La figure 1 représente de façon générale une bicyclette et schématise un plateau selon l'invention à l'état rétracté.
La figure 2 montre la bicyclette avec son plateau à l'état expansé.
La figure 3 représente la monture d'un premier mode de construction du plateau.
La figure 4 est une vue en coupe de la monture.
La figure 5 est une vue en perspective d'une plaquette vue de l'extérieur.
La figure 6 montre la plaquette en perspective vue de l'intérieur.
La figure 7 représente un secteur du plateau.
La figure 8 est une vue de côté d'un levier de commande.
La figure 9 représente le levier vu de face.
La figure 10 montre le ressort de rappel d'un secteur.
La figure 11 représente en perspective le dispositif de pilotage des leviers monté sur le cadre.

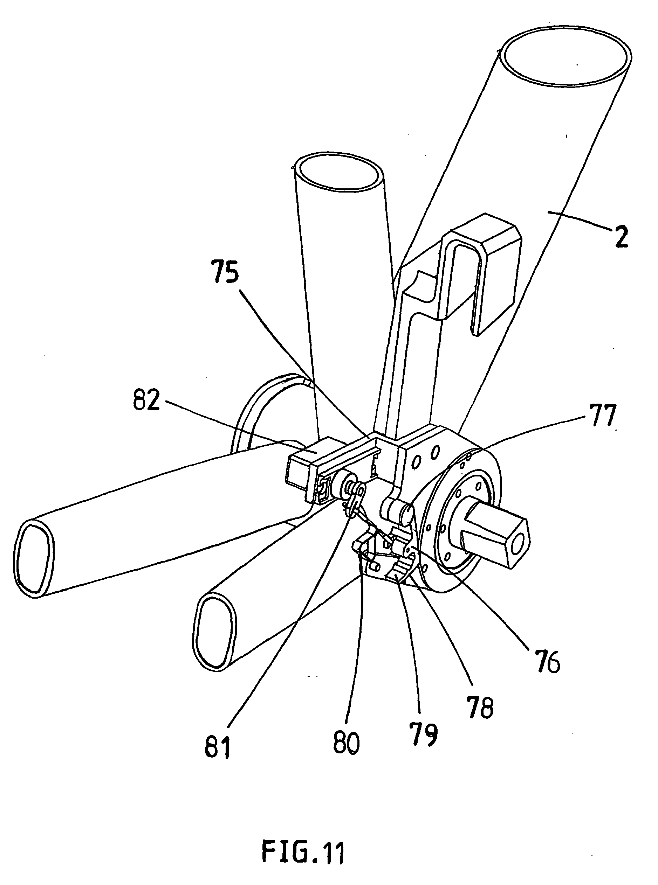

Les figures 11 à 14 montrent le dispositif de pilotage dans ses différentes positions.

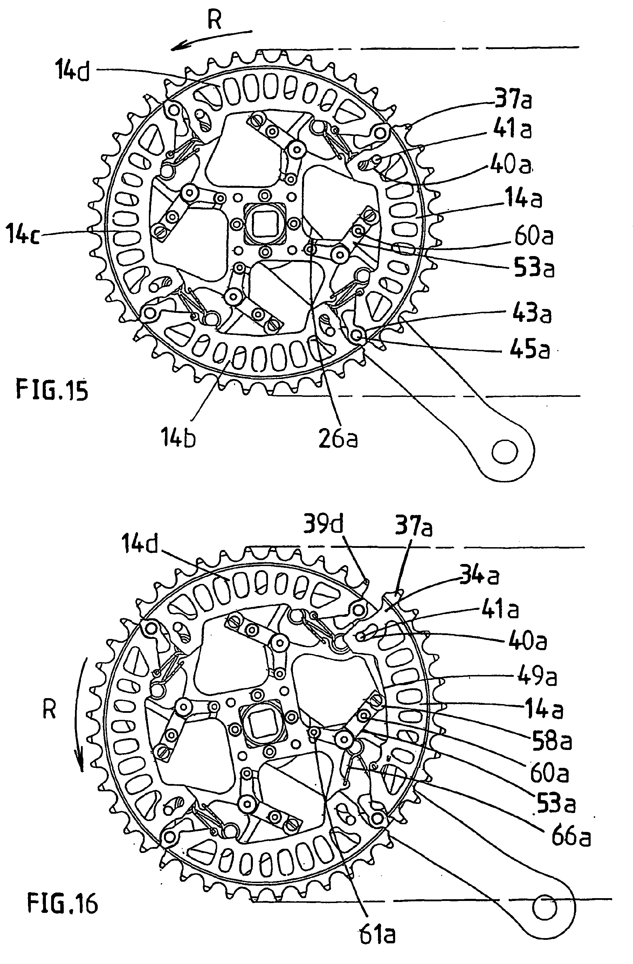

La figure 15 représente le plateau avec l'ensemble des secteurs en position basse.

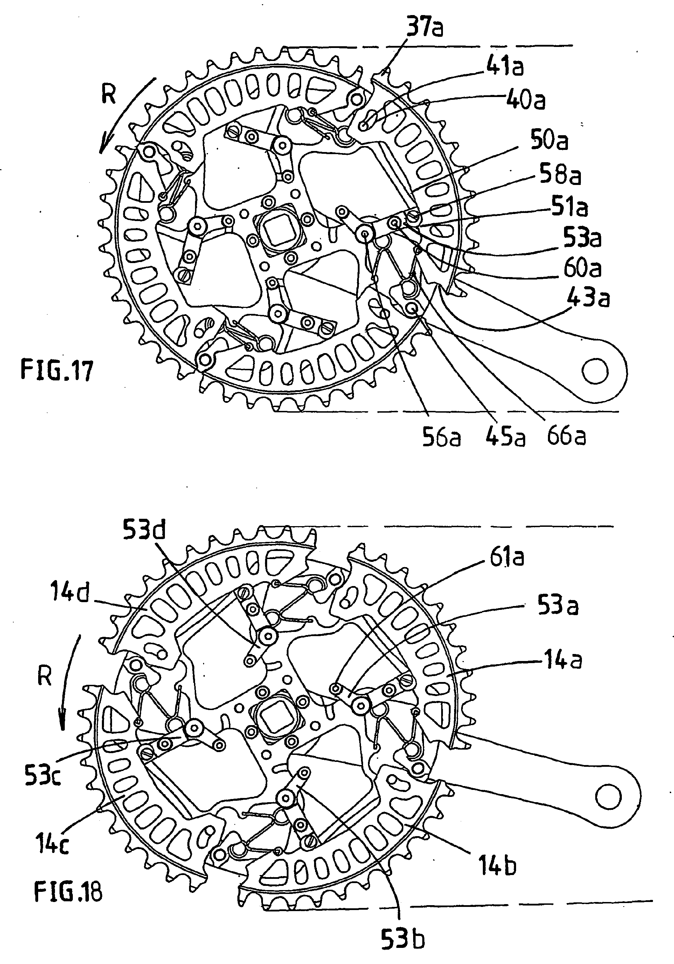

Les figures 16 et 17 montrent les deux phases de montée d'un secteur.

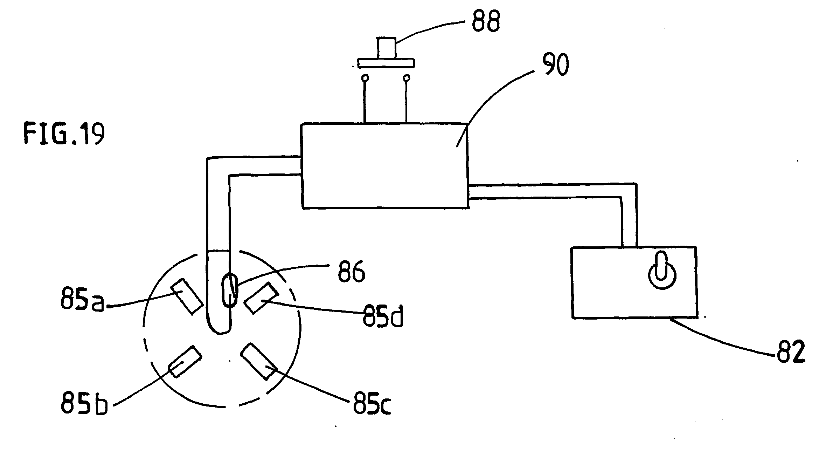

La figure 18 est une vue du plateau avec l'ensemble de ses secteurs en position haute.
La figure 19 montre de façon schématique le système électronique de gestion du servomoteur.

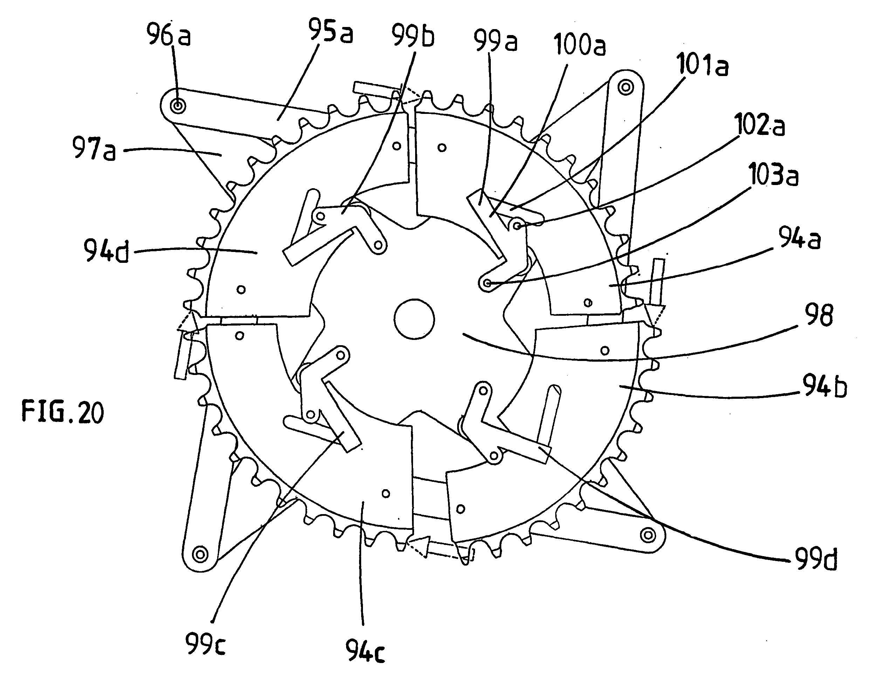

La figure 20 correspond à un autre mode de construction du plateau.

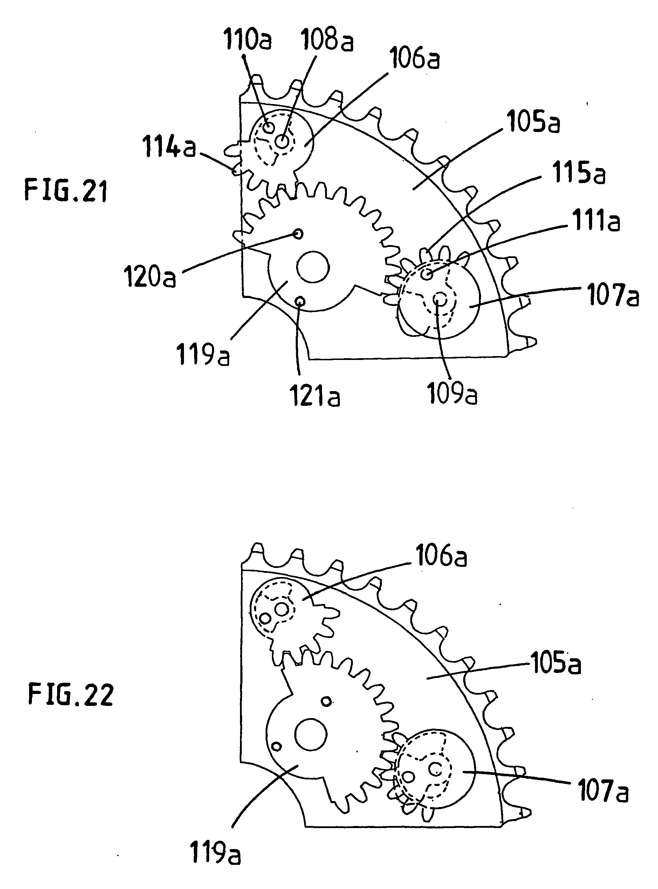

Les figures 21 et 22 illustrent un autre mode de construction du plateau.

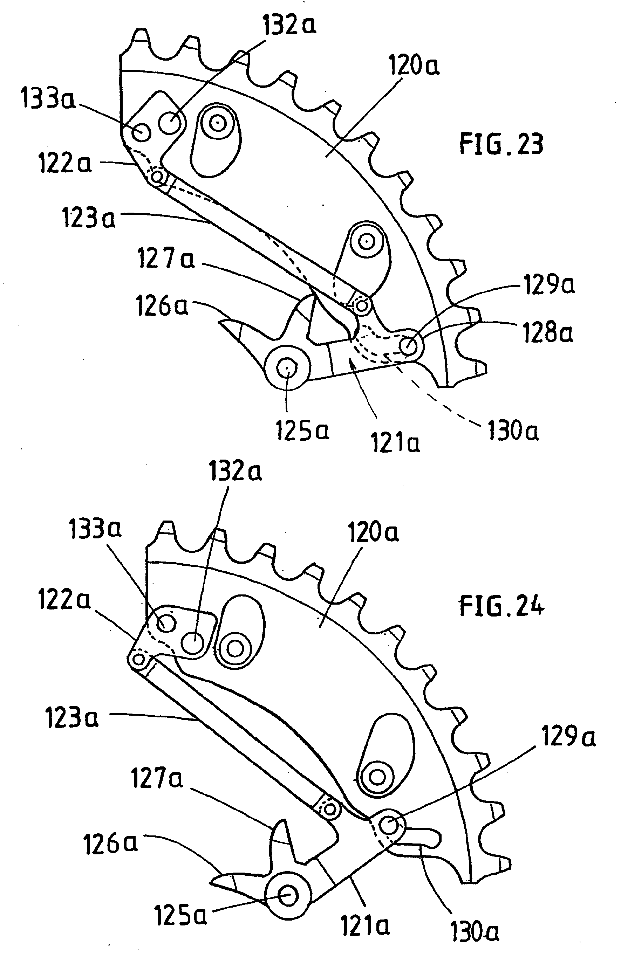

Les figures 23 et 24 sont relatives à un autre mode de construction.

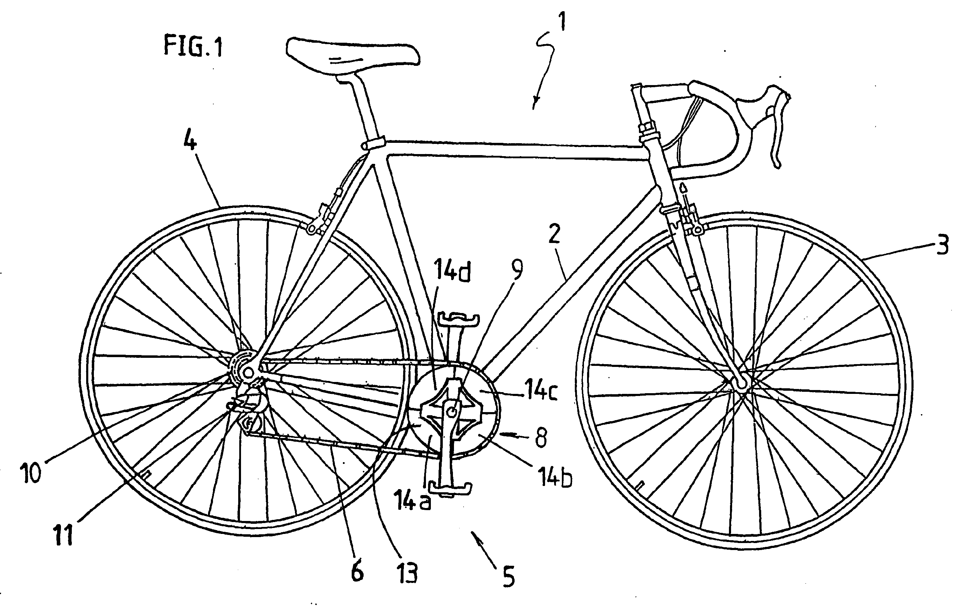

La figure 1 représente une bicyclette 1, qui comprend de façon connue un cadre 2, deux roues avant et arrière 3 et 4 ainsi qu'un système de transmission 5. Le système de transmission est composé d'une chaîne d'entraînement 6, qui est entraînée en rotation par un pédalier 8 mobile autour d'un axe de pédalier 9 porté par le cadre. La chaîne entraîne à son tour la roue arrière par l'intermédiaire de pignons 10 ayant des nombres de dents différents. Un dérailleur arrière schématisé en 11 pilote le transfert de la chaîne d'un pignon à l'autre.

Le pédalier 8 comprend de façon connue un plateau 13 dont la périphérie a une denture au pas de la chaîne 6.

Pour changer le rapport de développement, le plateau 13 est construit avec des secteurs mobiles dont on modifie la position par rapport à l'axe du pédalier. Les secteurs peuvent occuper deux positions stables correspondant à des états de diamètre différent du plateau.

Dans le mode de réalisation illustré dans les dessins, le plateau a une couronne dentée qui est formée par quatre secteurs 14a, 14b, 14c, 14d couvrant chacun un angle de quatre vingt dix degrés.

La figure 1 représente les quatre secteurs de la couronne dans leur position basse. Dans cette position, les secteurs sont adjacents et forment une couronne dentée continue. Ceci correspond à l'état de petit diamètre de la couronne.

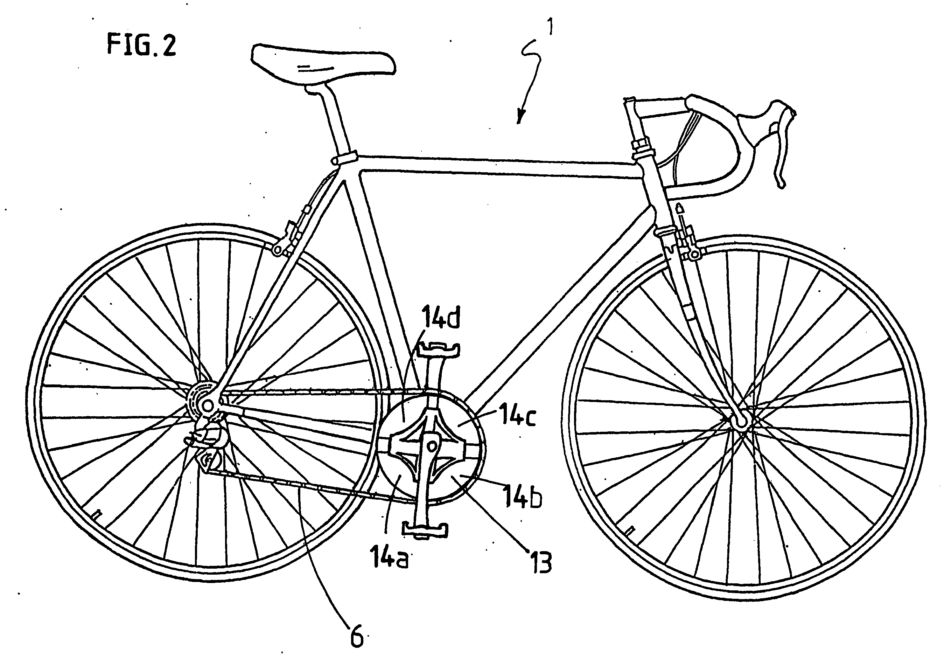

Dans la figure 2, les quatre secteurs 14a, 14b, 14c, 14d sont dans leur position haute qui correspond à l'état de grand diamètre de la couronne.

De façon connue, dans la position de grand diamètre, les secteurs sont éloignés d'une distance correspondant à un nombre entier de pas pour préserver la continuité d'engrènement de la chaîne sur la denture du plateau.

Par exemple si on considère un plateau ayant **44** dents dans son état de petit diamètre, formé de quatre secteurs de **11** dents chacun, il est possible par extension des secteurs de créer un écart d'un pas de chaîne entre deux plateaux consécutifs. Ceci revient à un plateau fictif de **48** dents, c'est-à-dire un plateau ayant un développement de **48** dents. Si l'on déplace les secteurs selon une trajectoire purement radiale, il y a une discontinuité du pas de la denture du plateau à la transition entre deux secteurs ayant des positions différentes. Cet écart correspond approximativement à un demi pas de chaîne. Dans ces conditions, la chaîne monte momentanément sur les dents jusqu'à la fin de cette période transitoire où elle reprend une position d'engrènement correcte.

Contrairement à cela, l'invention prévoit de déplacer les secteurs un à un selon une trajectoire qui a une composante radiale et une composante tangente.

Ainsi, si on reprend l'exemple précédent, au changement d'état du plateau d'un état de 44 dents vers un état fictif de 48 dents, les secteurs sont un à un déplacés selon une composante radiale qui les amènent sur le rayon du plateau fictif de 48 dents, et une composante tangente. La composante tangente est déterminée pour qu'à la jonction des deux secteurs adjacents l'un en position 44 dents, l'autre en position 48 dents, la denture de deux secteurs en coïncidence avec la denture de la chaîne. Dans la pratique on a obtenu de bons résultats en déplaçant le secteur selon une trajectoire tangente, ou quasiment tangente, qui déplace le secteur en question dans le sens de rotation du plateau d'une fraction additionnelle qui compense l'écartement des dents à la jonction des deux plateaux induite par la différence de rayon. Autrement dit, on s'arrange pour n'introduire entre les deux secteurs aucun pas ou aucune fraction de pas intermédiaire de chaîne.

Dans la suite de la rotation du plateau, les autres secteurs changent de position selon la même trajectoire radiale et tangente qui les écartent les unes des autres d'un espace correspondant à un pas de chaîne. Dans l'état de grand diamètre du plateau, les secteurs de 11 dents ont entre eux un espace d'un pas de chaîne, ce qui donne au total une denture fictive de 48 dents.

En procédant ainsi, on s'est aperçu qu'à l'inverse, au cours du passage du plateau de son état fictif de grand diamètre à son état de petit diamètre, la trajectoire du secteur décrite en sens inverse maintenait un espace correspondant à un pas de chaîne entre deux secteurs consécutifs l'un en position 48 dents et l'autre en position 44 dents avec une tolérance acceptable. Les autres secteurs suivant successivement la même trajectoire, les espaces entre deux secteurs consécutifs disparaissent jusqu'à ce que le plateau soit revenu totalement dans son état de 44 dents.

Ainsi, dans ces conditions, la coïncidence entre la denture du plateau et le pas de la chaîne est maintenue en permanence et en particulier dans toutes les phases transitoires d'extension ou de rétraction des secteurs avec une tolérance acceptable. Le changement d'état du plateau se fait donc dans des conditions très bonnes bien qu'il soit opéré sur le brin tendu de la chaîne. En effet, il n'y a pas de changement de plateau à proprement parlé. En outre la chaîne ne rencontre aucune discontinuité marquée de denture en particulier lors d'un changement d'état du plateau.

Dans la position haute du plateau, la denture des secteurs ne suit pas exactement une courbe circulaire. Toutefois pour l'exemple cité plus haut la variation en rayon est de l'ordre de 2%, ce qui est quasiment insensible au niveau de la vitesse de pédalage.

Avantageusement, on provoque le changement de position d'un secteur dans la phase de remontée du secteur en question sous le brin tendu de la chaîne. Dans ces conditions, on peut faire suivre plusieurs trajectoires possibles au secteur, pourvu qu'il ait atteint sa position finale haute ou basse au moment où il se présente sous le brin tendu de la chaîne.

Avantageusement, le changement d'état du plateau induit une variation -relativement faible de la vitesse linéaire de la chaîne et donc du développement. Globalement, cette variation est de l'ordre de 9% dans l'exemple présent. De préférence, le plateau selon l'invention est associé à une cassette de pignons dont la variation du nombre de dents entre deux pignons successifs est de l'ordre de 18% pour que le taux de variation au niveau du plateau reste inférieur au taux de variation au niveau de deux pignons successifs.

A titre d'exemple, on a obtenu de bons résultats pour un vélo de route avec un tel plateau associé à une cassette de huit pignons ayant respectivement 11,13,15,18, 21, 25, 30 et 36 dents. Avantageusement, le dérailleur arrière est construit conformément à la demande de brevet EP 558 425 et les changements de vitesse à l'avant et l'arrière sont pilotés par un système de gestion électronique assurant une commande synchronisée des changements de vitesse au niveau du plateau et du dérailleur arrière.

Ce système est prévu pour fonctionner de la façon suivante. Partant par exemple du rapport de transmission le plus grand, le premier changement de vitesse consiste en un changement d'état du plateau de son état de grand diamètre à son état de petit diamètre, le second en un changement simultané de pignons et d'un changement d'état du plateau pour le ramener à son état initial, puis de nouveau un changement d'état du plateau seul et ainsi de suite.

Le tableau suivant indique les rapports de transmission et les variations de rapports pour ce système adapté à un vélo de route.

| Etat du plateau | nombre de dents du pignon | rapport de transmission | variation du rapport % |
|---|---|---|---|
| 48 | 11 | 4,36 | |
| 44 | 11 | 4,00 | 9,09 |
| 48 | 13 | 3,69 | 8,33 |
| 44 | 13 | 3,38 | 9,09 |
| 48 | 15 | 3,20 | 5,77 |
| 44 | 15 | 2,93 | 9,09 |
| 48 | 18 | 2,67 | 10,00 |
| 44 | 18 | 2,44 | 9,09 |
| 48 | 21 | 2,29 | 6,94 |
| 44 | 21 | 2,10 | 9,09 |
| 48 | 25 | 1,92 | 9,13 |
| 44 | 25 | 1,76 | 9,09 |
| 48 | 30 | 1,60 | 10,00 |
| 44 | 30 | 1,47 | 9,09 |
| 48 | 36 | 1,33 | 10,00 |
| 44 | 36 | 1,22 | 9,09 |

La plage des rapports de transmission s'étend depuis 4,36 jusqu'à 1,22, ce qui donne un ratio général de 3,57.

Si l'on compare ce tableau à un système traditionnel, on constate qu'il n'existe plus aucun chevauchement dans la successions des différents rapports. En outre, la variation des rapports est beaucoup plus régulière et centrée sur une valeur de 8%, ce qui améliore le confort et la souplesse d'utilisation du système. De plus, la plage des rapports est plus étendue.

Par ailleurs, on peut remarquer qu'une plage de rapports de transmission équivalente à la plage d'un système traditionnel pourrait être couverte avec seulement six pignons, en supprimant les pignons de plus grand diamètre.

En réduisant le nombre de pignons par rapport à un système traditionnel, on atténue les problèmes liés à un défaut d'alignement de la chaîne. Ce défaut d'alignement se produit en effet sur une amplitude angulaire plus réduite.

On réduit également l'encombrement de la cassette de pignons sur le corps de moyeu, ce qui permet d'éloigner l'un de l'autre les flasques d'accrochage des rayons sur le moyeu, d'où il résulte un meilleur équilibrage des tensions de rayons et une plus grande rigidité de la roue. On gagne également du poids au niveau des pignons.

Il est certain que par rapport à un système traditionnel, il y a ici davantage de changements de rapports au niveau du sous-ensemble secondaire.

Toutefois ces changements de rapports se produisent seuls ou en combinaison avec un seul changement de pignon. En outre, ils induisent une variation de rapport plus réduite que dans le cas traditionnel. Enfin, ils sont provoqués par une expansion du plateau, et non par un dérailleur agissant sur le brin tendu de la chaîne. Le rendement est donc bien meilleur et les temps de transition plus courts.

Naturellement ce mode d'exécution n'est pas limitatif. Notamment, on pourrait adopter d'autres valeurs de nombre de dents.

Selon le mode de construction du plateau qui va maintenant être décrit, le déplacement d'un secteur d'une position à l'autre est opéré avec un double mouvement de bascule. Ce mouvement permet de maîtriser la trajectoire du secteur selon les deux composantes radiale et tangentielle. Le mode de réalisation qui va être décrit se rapporte de façon non limitative à un plateau de 44 dents formé de 4 secteurs de 11 dents extensible à un état fictif de 48 dents.

Pour simplifier la description, les éléments seront désignés avec une référence et s'il y a lieu d'un indice a, b, c ou d se rapportant à un secteur. D'un secteur à l'autre, les mêmes éléments seront désignés avec la même référence, mais un indice différent.

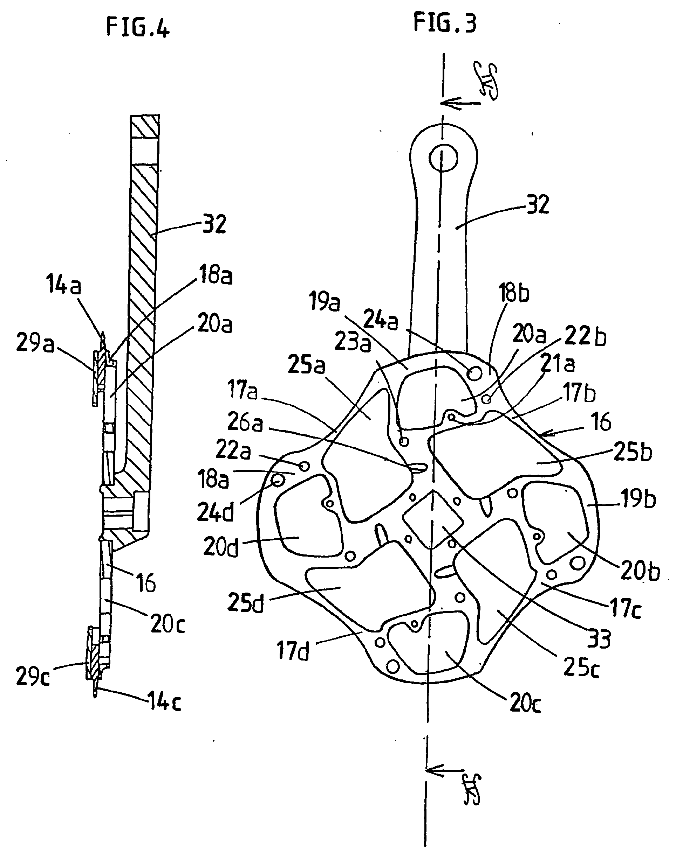

Le plateau comprend une monture centrale 16 de support qui porte les quatre secteurs. La monture est représentée en figure 3. Il s'agit selon la figure d'une structure aplatie de forme approximativement carrée. Le long des côtés de cette forme carrée, la monture a des zones 17a, 17b, 17c, 17d qui sont aménagées pour permettre le guidage des extrémités de deux secteurs adjacents du plateau.

La zone 17a a en amont et en aval, compte tenu du sens de rotation normal de la monture des surfaces de guidage 18a et 19a pour chacune des zones amont et aval d'un secteur. La surface aval 19a s'étend au bord d'une cavité 20a prévue pour un ressort de rappel qui sera décrit ultérieurement. Au bord de la cavité un perçage 21a est prévu pour l'accrochage du ressort précédemment évoqué. Trois autres perçages 22a, 23a, 24a sont respectivement destinés à servir de logement respectivement pour une goupille de guidage, l'axe d'articulation d'un levier de basculement et une butée de guidage. Ces différents éléments seront décrits dans la suite.

Les autres zones sont semblables à ce qui vient d'être décrit.

Entre les cavités 20a, 20b, 20c, 20d, la monture a des ajours d'allégement 23a, 25b, 25c, 25d. Ces ajours sont facultatifs, leur forme n'est pas limitative.

Vers l'axe du pédalier, une rainure 26a est usinée approximativement à mi-distance entre le perçage 23a prévu pour le levier de basculement et l'axe du pédalier. Cette rainure est centrée sur le perçage 23a. Sa fonction est de limiter le débattement angulaire du levier qui sera décrit ultérieurement.

Des plaquettes telles que la plaquette 29a sont prévues pour être assemblées en vis-à-vis des surfaces de guidage de deux secteurs adjacents notamment 19a et 18b de façon à laisser un espace de guidage pour les zones amont et aval de deux secteurs adjacents. Ces plaquettes ont des perçages 30a, 31a en correspondance avec les perçages 24a et 22b. Les plaquettes sont assemblées à la monture par tout moyen approprié, par exemple des vis et des entretoises. Les plaquettes présentent au dos une butée 45a de guidage pour la zone aval du secteur traversée par le perçage 30a.

Pour faciliter la compréhension des dessins, les plaquettes ne sont pas représentées dans les figures suivantes, seule la butée de guidage est visible.

Un bras de manivelle 32 est relié solidairement à la monture, qui présente au centre un perçage 33 carré pour l'axe de pédalier et l'autre bras de manivelle. Un autre mode de construction des manivelles peut aussi convenir.

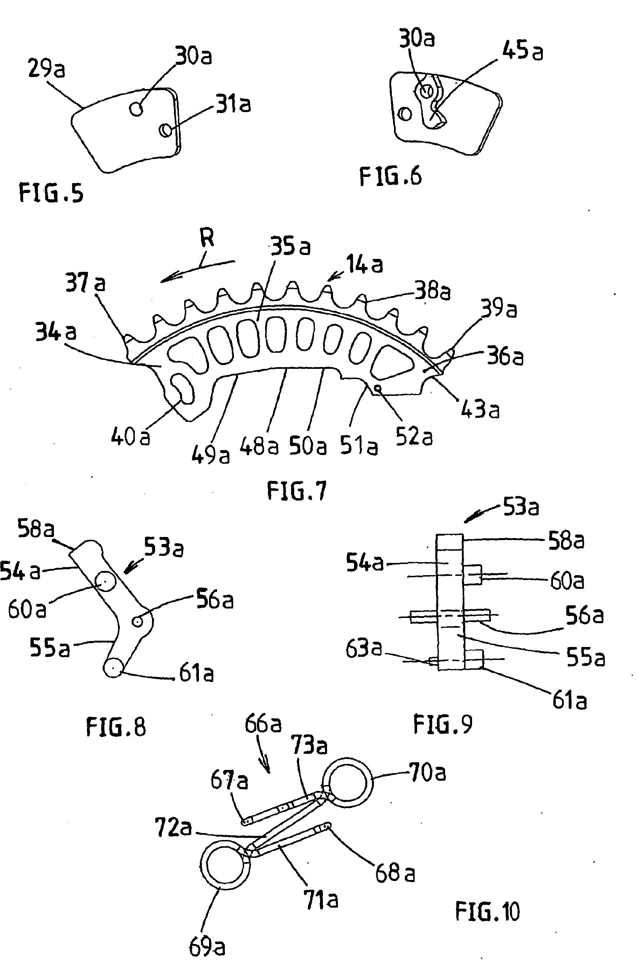

Le secteur 14a va maintenant être décrit en référence à la figure 7, les autres secteurs sont identiques. Le secteur 14a a globalement la forme d'un croissant avec une zone amont 34a, une zone médiane 35a et une zone aval 36a, compte tenu de son sens de rotation normal repéré par la flèche R.

Le secteur 14a présente à sa périphérie une denture 38a de 11 dents réalisée au pas de la chaîne. Dans le cas présent de quatre secteurs, la denture couvre le quart de la denture du plateau. La denture s'étend le long d'une courbe circulaire centrée sur l'axe de pédalier lorsque le secteur est dans une position basse, c'est-à-dire la position de la figure 1. En variante, la courbe pourrait être centrée sur l'axe du pédalier lorsque le secteur est en position haute ou bien encore dans une position intermédiaire.

De préférence, la dernière dent 39a du secteur est usinée le long de sa surface de descente et la profondeur de l'entre dent qui la suit est augmentée. Cette disposition a pour but de permettre à la chaîne de plonger sous une direction tangente au secteur en aval du secteur. Ceci facilite le transfert de chaîne lors d'une rétraction des secteurs.

Dans la zone amont, le secteur 14a a une lumière de guidage 40a en forme de haricot. La lumière est orientée approximativement selon une direction radiale, avec la partie centrale du haricot orientée vers la zone aval.

La lumière est prévue pour être traversée par une goupille de guidage 41a logée dans le perçage 22a de la monture. La goupille circule dans la lumière sans jeu transversal, au jeu de fonctionnement près, et avec ses bouts, la lumière limite le déplacement de la zone amont 34a du secteur lors de son changement de position. La longueur radiale de la lumière est approximativement égale à l'amplitude de déplacement radial du secteur au diamètre de la goupille près. Dans la position basse du secteur, la goupille guide la lumière pour que la première dent 37a du secteur soit distante d'un pas de chaîne de la dernière dent du secteur précédent se trouvant lui aussi en position basse. Ainsi le plateau présente 44 dents. En position haute la goupille guide la lumière pour que la première dent 37a se trouve distante de l'axe du moyeu d'une distance correspondant sensiblement au rayon d'un plateau de 48 dents, et qu'elle soit distante de la dent qui la précède d'une distance égale à un pas de chaîne, le secteur précédent se trouvant en position basse.

A l'extrémité de sa zone aval 36a du secteur se trouve une encoche 43a. Le bord de l'encoche s'appuie contre la butée de guidage 45a qui se trouve au dos de la plaquette lorsque la zone aval 36a se trouve en position basse.

A la base du secteur, c'est-à-dire vers l'axe du pédalier, le secteur est délimité par une rampe 48a prévu pour coopérer avec un levier de basculement qui sera décrit ultérieurement. La rampe 48a a une direction générale perpendiculaire à une direction radiale. Elle comprend deux pentes 49a, 50a chacune située vers une zone amont et aval du secteur et formant entre elles un dièdre d'angle au sommet légèrement inférieur à un angle plat.

A son extrémité aval, la pente 50a se referme par un retour 51a destiné à servir de butée au levier de basculement. Lorsque le secteur est en place sur la monture, le retour 51a et le perçage 23a pour l'axe de pivotement du levier se trouvent approximativement sur une même direction radiale.

Dans cette zone aval du secteur, un perçage 52a est prévu pour un ressort de rappel qui sera décrit ultérieurement. Le perçage 52a est situé sur le secteur dans sa position basse, entre la lumière 40a et l'encoche 43a pour qu'une traction exercée par le ressort puisse avoir une action de rappel en direction de l'axe du pédalier sur l'une et l'autre zones amont et aval.

Un levier de basculement 53a pour le changement de position du secteur 14a est représenté dans les figures 8 et 9. Le levier a deux branches 54a et 55a s'étendant de part et d'autre d'un axe de pivotement 56a et formant entre elles un angle un peu supérieur à un angle droit. L'axe de pivotement 56a est logé dans le perçage 23a de la monture. La branche 54a la plus longue a une tête 58a prévue pour coopérer avec la rampe 48a du secteur. La longueur de la branche 54a est déterminée en fonction de la rampe 48a pour amener la denture de la zone aval 36a du secteur approximativement sur le rayon d'un plateau de 48 dents.

A égale distance de l'axe de pivotement 56a, chacune des branches 54a et 55a porte un taquet 60a, 61 a d'indexation du levier. Le taquet 60a situé du même côté de l'axe 56a que la tête 58a est dit taquet d'extension. L'autre taquet 61a plus proche de l'axe du pédalier est dit taquet de rétraction.

Une pige 63a située sur la branche la plus courte, à l'opposé du taquet 61a circule dans la rainure 26a de la monture. Dans l'une des positions stables du levier, la pige se trouve au fond de la rainure 26a.

Chacun des secteurs est rappelé élastiquement en position basse et maintenu dans cette position par un ressort de rappel qui le relie à la monture. Pour le secteur 14a, un ressort 66a est prévu avec ses deux extrémités 67a et 68a logées respectivement dans les perçages 52a de la zone aval du secteur et 21a de la monture. Le corps du ressort est quant à lui logé dans la cavité 20a de la monture. Selon le mode préféré de construction du ressort représenté dans les figures, le corps du ressort comprend deux enroulements 69a, 70a reliés entre eux et aux extrémités par des branches 71a, 72a, 73a. Le ressort 66a est dans ces conditions non linéaire et il présente un faible encombrement. Sa force de rappel croît rapidement sur une amplitude d'extension qui correspond à sa précontrainte initiale. Puis sa force de rappel est relativement stable.

Un mécanisme d'indexation est prévu pour commander le basculement des leviers et donc le transfert des secteurs d'une position à l'autre. Ce mécanisme est par exemple monté solidairement sur le cadre 2 de la bicyclette. Il comprend une platine 75 qui est montée par exemple sur le palier de l'axe de pédalier, et qui est serré avec l'écrou de serrage de l'axe. La platine porte une biellette d'indexation mobile 76 qui est articulée autour d'un axe 77 porté par la platine. Vu de côté, l'axe 77 se trouve au voisinage de la trajectoire des axes de pivotement des leviers, et en particulier de l'axe 56a du levier 53a. A l'opposé de l'axe 77, la biellette a un pied 78. Le pied 78 a une surface d'appui terminale qui est sensiblement perpendiculaire à la direction longitudinale définie par la biellette, et de préférence, il comprend une zone flexible 79 qui est orientée vers l'extérieur du plateau. Selon le mode de réalisation illustré, la biellette est entraînée par une tringle 80 elle-même raccordée à la came de sortie 81 d'un servomoteur 82 piloté électriquement. D'autres moyens pourraient également convenir, comme un électroaimant rotatif ou linéaire ou un actionneur piezoélectrique.

Le servomoteur est piloté par un système électronique de gestion qui sera décrit ultérieurement. Selon la position angulaire de la biellette, le pied est prévu pour faire obstacle aux taquets d'indexation du levier, ou au contraire àesquiver les taquets en question lors de la rotation du plateau.

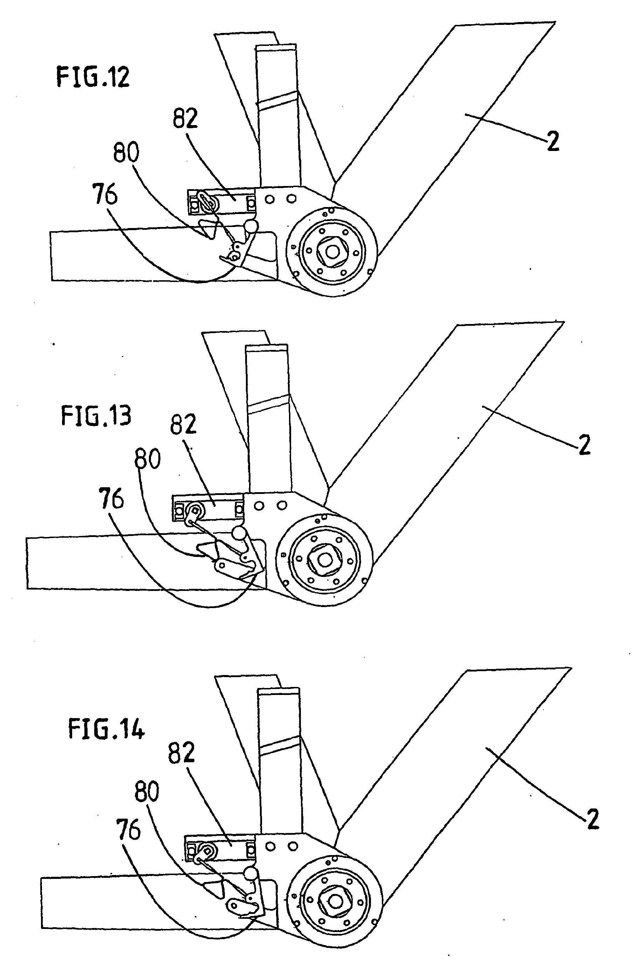

Les figures 12 et 13 représentent respectivement la biellette dans la position où elle fait obstacle aux taquets d'extension et de rétraction, c'est-à-dire les taquets 61a et 60a pour le levier 53a.

La figure 14 montre la biellette dans une position intermédiaire où elle se trouve hors de portée des différents taquets.

Le transfert du secteur 14a d'une position à l'autre est illustré dans les figures 15 à 18.

Initialement comme cela est représenté en figure 15, le secteur 14a et les autres secteurs sont en position basse et sont maintenus dans cette position par leur ressort de rappel respectif. Dans cette position, les dentures des secteurs sont contiguës. Le plateau opère globalement comme un plateau de petit diamètre.

Les leviers, et en particulier le levier 53a se trouvent dans la position stable représentée dans la figure 15. Sous l'effet du ressort 66a qui rappelle le secteur 14a en position basse, la tête 58a de la branche 54a se trouve ramenée vers l'axe du pédalier, et l'extrémité 61a de l'autre branche 55a est maintenue en butée au fond de la rainure 26a.

La biellette de commande est placée dans une position intermédiaire, celle de la figure 14, qui place son pied 78 hors de portée des taquets 60a et 61a de pivotement du levier.

Pour commander un changement de position du secteur 14a, le servomoteur pilote la biellette de façon à amener le pied 78 sur la trajectoire du taquet 60a d'extension de façon à provoquer le pivotement du levier 53a avec la rotation du plateau. Cette position de la biellette de commande est illustrée en figure 13.

Dans une première phase de pivotement du levier illustrée en figure 16, la tête 58a du levier décrit la pente 49a de la rampe 48a. Le levier opère alors un premier basculement du secteur 14a. La zone amont s'éloigne de l'axe du pédalier jusqu'à ce que la goupille 41a arrive au bout de la lumière 40a. La goupille atteint l'extrémité de la lumière 40a en même temps que la tête du levier arrive à la liaison des deux pentes 49a et 50a. La position de la pente 49a proche de la zone amont 34a du secteur et son inclinaison relativement à l'angle d'attaque de la tête 58a permettent ce premier mouvement de basculement de la zone amont 34a.

Dans une deuxième phase, la biellette continue à s'opposer au passage du taquet 60a. Le levier 53a continue à pivoter avec la rotation du plateau. Sa tête 58a attaque la seconde pente 50a de la rampe 48a, et oblige la zone aval du secteur à s'éloigner de l'axe du pédalier, contre la force de rappel du ressort.

A la fin de cette seconde phase de basculement, ainsi que le montre la figure 17, la tête 58a du levier 53a est en butée contre le retour 51a. Le taquet 60a échappe à la biellette 76 par une flexion de la zone flexible 79 du pied 78.

Dans cette position du levier 53, la branche 54a empêche le secteur de pivoter autour d'un axe défini par la goupille 41a. La branche est orientée juste au-delà de la ligne d'action de la force exercée par le secteur, si bien que le levier et le secteur sont maintenus dans une position stable.

La zone amont est également maintenue dans une position d'équilibre stable. En effet, en l'absence de sollicitation de la part de la chaîne, la force de rappel du ressort 53a est suffisante pour maintenir le bout inférieur de la lumière 40a en haricot en appui contre la goupille 41a. Lorsque le secteur est soumis à une tension de la part de la chaîne, la sollicitation qui en résulte est essentiellement orientée selon une tangente à la courbure du secteur. Dans ces conditions, la goupille coopère avec le bord de sa lumière pour reprendre cette sollicitation tangentielle. La réaction que la goupille exerce sur le secteur renforce la position stable de cette zone amont compte tenu de l'appui du secteur sur la tête du levier, et de la courbure de la lumière en haricot.

Dans cette position haute, le secteur 14a a sa première dent 37a qui est distante d'un pas de chaîne de la dernière dent du secteur qui le précède.

Si la biellette est maintenue dans sa position angulaire de la figure 12, elle procède à l'extension des secteurs au fur et à mesure de la rotation du plateau, et au fur et à mesure que les taquets d'extension viennent buter contre son pied.

Une fois que l'ensemble des secteurs a été transféré dans la position d'extension, le servomoteur ramène la biellette dans sa position intermédiaire de la figure 14 hors de portée des taquets d'indexation.

Le transfert des plateaux vers leur position de rétraction se réalise en amenant la biellette dans la position de la figure 12 où elle se trouve sur la trajectoire des taquets de rétraction, en particulier le taquet 61a du levier 53a.

Dans leur position d'origine, les secteurs occupent tous une position haute représentée dans la figure 18. En immobilisant le taquet de rétraction, la biellette oblige le levier 14a à pivoter de façon que sa tête 58a quitte l'appui du retour 51a et décrive la rampe 50a en sens inverse. Au cours de cette première phase, sous l'effet de la traction du ressort, le secteur bascule autour de la goupille 41a. Sa zone aval est rapprochée de l'axe du pédalier jusqu'a ce que l'encoche 43a reprenne appui contre la butée de guidage 45a.

Le secteur 14a se trouve dans la même configuration que celle représentée dans la figure 16.

Le plateau poursuivant sa rotation, le levier 53a est ramené dans la position qu'il occupe à la figure 15, libérant ainsi la zone amont du secteur qui est rappelée en direction de l'axe du pédalier par la traction résiduelle du ressort.

Dans cette position, le secteur 14a ramené en position basse a sa première dent 37a située à une distance de deux pas de chaîne de la dernière dent 39d du secteur 14d qui le précède.

L'usinage du dernier entre-dent mentionné plus haut facilite la plongée de la chaîne.

Des variantes de constructions du plateau sont possibles. Notamment le guidage de la zone amont du secteur pourrait être réalisé par d'autres moyens. En particulier, on pourrait inverser la lumière et la goupille pour avoir la lumière sur la monture et la goupille sur le plateau. On pourrait aussi inverser le mouvement de double bascule, c'est-à-dire faire monter en premier la zone aval du secteur et en dernier la zone amont. Le mouvement du secteur selon une direction tangente pourrait avoir un sens inverse pour qu'à la montée du secteur on ait un espace d'un pas de chaîne en amont du secteur, au lieu d'en aval.

Un levier de commande unique est préféré pour transférer le plateau d'une position à l'autre. En variante, on pourrait avoir deux leviers tels que le levier 53a chacun chargé de commander la montée ou la descente d'une zone du plateau. On pourrait inverser le mode de fonctionnement d'un levier pour que son articulation se trouve sur le secteur et la rampe sur la monture.

La figure 19 représente de façon schématique le système électronique de gestion qui pilote le servomoteur. Ce circuit comprend quatre aimants 85a, 85b, 85c, 85d qui sont montés sur le plateau à angle droit les uns des autres. Un relais de type Reed 86 est fixé sur le cadre de la bicyclette. Le passage d'un aimant devant le relais correspond à une position précise d'un levier de commande par rapport au pied de la biellette.

Le système comprend un bouton de commande 88 qui peut être éventuellement dédoublé et un circuit de traitement 90. Le circuit de traitement comprend une unité de comptage qui est apte à compter les impulsions de fermeture du relais Reed, et une unité de traitement qui pilote le servomoteur 82. Initialement le servomoteur se trouve dans sa position intermédiaire, et sa dernière position de pilotage de la biellette est mémorisée.

A l'envoi d'une commande de changement d'état du plateau, dès que l'unité de comptage a compté une impulsion, l'unité de traitement pilote le servomoteur dans la position opposée à sa dernière position d'indexation. Puis l'unité de comptage est déclenchée. Dès qu'elle a compté quatre impulsions correspondant à un tour entier de plateau, l'unité de traitement pilote le servomoteur pour le ramener dans sa position intermédiaire, et mémorise la nouvelle position de pilotage d'où revient le servomoteur.

Le servomoteur est choisi suffisamment rapide pour qu'un changement de position de la biellette puisse être opéré avant qu'un nouvel aimant se présente devant le relais Reed, ceci dans une plage raisonnable de vitesse de rotation du plateau.

D'autres modes de pilotage du servomoteur sont aussi possibles, de même que d'autres modes de pilotage des leviers sont possibles. Notamment on pourrait commander les leviers de façon purement mécanique. On pourrait aussi détecter le passage des secteurs autrement que par des aimants et un relais Reed.

Egalement, il est possible de coupler le système de gestion électronique avec un système de gestion du dérailleur arrière en particulier lorsque le dérailleur arrière est à commande électrique pour coordonner un changement de vitesse au niveau du plateau avec un changement au niveau du dérailleur arrière, ou même pour gérer les deux systèmes de transmission à l'aide d'une commande unique.

Selon un autre mode d'exploitation du système de gestion, on pourrait créer un état intermédiaire du plateau où une partie des secteurs est en position haute et une partie en position basse. Dans le cas de quatre secteurs, on pourrait avoir deux secteurs diamétralement opposés en position haute et les deux autres secteurs dans une position haute. Le plateau aurait dans ces conditions un fonctionnement analogue à un plateau ovale.

La figure 20 représente un autre mode de construction du plateau. L'idée générale est ici de déplacer chacun des secteurs d'une position à l'autre par un mouvement de rotation pure. Les positions basse et haute d'un secteur sont identiques à celles qui ont été décrites précédemment. Ces positions étant déterminées, il -est possible d'identifier un centre instantané de rotation autour duquel le secteur doit pivoter selon une rotation pure pour passer d'une position à l'autre.

Ainsi, la figure représente quatre secteurs 94a, 94b, 94c, 94d. Chaque secteur, et en particulier le secteur 94a est fixé solidairement à l'extrémité d'un bras 95a, lui-même relié par une articulation autour d'un axe 96a à la branche radiale 97a d'une monture 98. La position de l'axe 96a a été déterminée pour que cet axe coïncide avec le centre instantané de rotation du secteur. Comme on peut le voir sur la figure, l'axe 96a se trouve approximativement à l'intersection d'une droite tangente à la zone amont du secteur et d'une droite de direction radiale passant approximativement par le milieu du secteur situé en amont dudit secteur.

Le changement de position de chacun des secteurs est commandé par un levier tel que le levier 99a. Ce levier a une première branche 100a qui coopère avec une lumière 101 a du secteur pour contrôler l'amplitude du mouvement angulaire autour de l'axe 96a, et deux branches auxiliaires qui portent chacune un taquet d'indexation 102a, 103a permettant de commander le basculement du levier. Ce mode de commande de basculement du levier est semblable à ce qui a été décrit précédemment, et le levier est prévu pour coopérer avec une biellette qui ne sera pas décrite en détail.

Pour illustrer l'invention, le secteur 94b est représenté en position haute alors que les autres secteurs sont en position basse. On peut voir qu'à la jonction entre les secteurs 94a et 94b, la denture est en coïncidence avec le pas de la chaîne sans pas intermédiaire. A la jonction avec le secteur 96c en aval, il y a un pas de chaîne intermédiaire. Ainsi, à la montée comme à la descente, la denture du plateau est maintenue en coïncidence avec le pas de la chaîne.

Un autre mode de construction est représenté de façon schématique aux figures 21 et 22. Selon ce mode de construction, on pilote la trajectoire d'un secteur 105a à l'aide de deux excentriques 106a, 107a, l'un situé dans la zone amont, l'autre dans la zone aval. Les excentriques pivotent autour d'axes 108a et 109a montés sur le secteur, -et d'axes décentrés 110a et 111a montés sur une monture de pédalier. Chaque excentrique a une denture 114a, 115a à sa périphérie.

La rotation des excentriques est commandée éventuellement de façon synchronisée par un pignon 119a monté également sur le plateau et à l'aide de deux taquets 120a, 121a qui opèrent selon le même mode de fonctionnement que les taquets précédents. Selon une variante de construction, les excentriques pourraient être remplacés par des biellettes.

La position relative des axes 108a, 110a, 109a, 111a et le diamètre primitif des dentures 114a et 115a sont déterminés pour que comme dans les cas précédents, le secteur soit déplacé selon une composante radiale et une composante tangente qui maintiennent la denture en coïncidence avec le pas de la chaîne lors des phases transitoires d'extension et de rétraction.

Selon la variante des figures 23 et 24, la trajectoire d'un secteur 120a est pilotée par un basculeur 121a et un excentrique 122a reliés l'un à l'autre par une biellette 123a. Le basculeur 121a est monté pivotant autour d'un axe 125a porté par la monture du plateau. Cette monture n'est pas représentée dans les figures 23 et 24.

Vers l'axe 125a, le basculeur a deux branches 126a, 127a qui sont prévues pour être accrochées par un organe d'indexation, par exemple une biellette d'indexation telle que la biellette 79 précédemment décrite, de façon à piloter le changement d'état du secteur.

Le basculeur 121a possède par ailleurs une tête 128a avec une goupille 129a qui circule dans une lumière 130a découpée du côté de l'extrémité aval du secteur 120a.

La lumière 130a a globalement une forme de "S", avec une partie centrale orientée approximativement de façon radiale et deux extrémités arrondies pour les deux positions hautes et basses du secteur.

Vers l'autre extrémité, le secteur est déplacé par un excentrique 122a articulé autour d'un axe 132a porté par la monture et relié à l'extrémité amont du secteur 120a par une goupille 133a. La goupille 133a est déplacée par l'excentrique de part et d'autre d'un cercle imaginaire centré sur l'axe du plateau et passant par l'axe 132a. Le basculeur 121a et l'excentrique 122a sont reliés par une biellette 123a qui synchronise leur mouvement.

La rotation du basculeur induit un déplacement de l'extrémité aval du secteur selon des composantes radiale et tangente. L'excentrique induit un déplacement du secteur principalement selon une direction radiale.

De façon optionnelle, le basculeur 121a et l'excentrique 122a sont logés dans des logements creusés dans la monture du plateau. Les parois latérales de ces logements font office de butée de reprise d'effort pour les deux positions extrêmes du basculeur et de l'excentrique, de façon à reprendre les efforts induits par la tension de la chaîne.

Comme dans les cas précédents en position basse, les premières dents des différents secteurs sont juxtaposées aux dernières dents du secteur qui les précède pour que la denture des différents secteurs soit continue et en coïncidence avec le pas de chaîne. En position haute, ces dents sont distantes d'un pas de chaîne. Les secteurs sont pilotés individuellement, et de préférence le changement de position de chaque secteur est effectué lorsque le secteur en question se trouve dans la zone de remontée du plateau.

Naturellement la présente description n'est donnée qu'à titre indicatif, et l'on pourrait adopter d'autres modes de mise en oeuvre de l'invention sans pour autant sortir du cadre de celle-ci.

Notamment, le nombre de secteurs du plateau n'est pas limitatif, et l'on pourrait avoir plus ou moins de quatre secteurs. En outre, le nombre de dents du plateau n'est pas non plus limitatif. On a décrit un exemple d'un plateau ayant un état de **44** dents et un état fictif de **48** dents. On pourrait appliquer l'invention à un plateau de **48** dents ayant un état fictif de **52** dents par extension des plateaux, ou encore un plateau de **49** dents extensibles à **53** dents en mettant en oeuvre des secteurs non identiques, trois de **12** dents, et un de **13** dents.

Ainsi, l'invention permet de modifier le développement du système de transmission avant en changeant l'état du plateau par une extension de sa denture. Comme il n'y a pas de transfert latéral de la chaîne, et aussi comme la variation de développement induite est relativement faible, le changement d'état du plateau se fait dans des conditions très bonnes de souplesse et de douceur, même lorsque la chaîne est soumise à une tension élevée.

De plus, l'énergie nécessaire au changement d'état du plateau est prélevée pour l'essentiel sur la rotation même du plateau. Le servomoteur ou autre système équivalent, qui commande un changement d'état du plateau consomme une énergie très faible.

## Revendications

1. Plateau d'entraînement pour un pédalier de bicyclette comprenant une couronne dentée dont la denture a un pas en correspondance avec un pas de chaîne, la couronne étant divisée en une pluralité de secteurs (14a, 14b, 14c, 14d, 94a, 94b, 94c, 94d, 105a, 120a), les secteurs étant portés par une monture (16, 98) mobile en rotation autour d'un axe de pédalier, chaque secteur du plateau étant mobile relativement à la monture dans un plan perpendiculaire à l'axe de pédalier entre une position basse, et une position haute où il est davantage éloigné de l'axe du pédalier définissant ainsi un état de petit diamètre et un état fictif de grand diamètre du plateau, un système de transfert de chaque secteur pour transférer ledit secteur d'une position à l'autre, et un mécanisme d'indexation pour commander le système de basculement des secteurs, chaque secteur (14a, 14b, 14c, 14d, 94a, 94b, 94c, 94d, 105a, 120a) étant monté flottant par rapport à la monture (16, 98) et guidé dans son mouvement de transfert selon une trajectoire comprenant une composante radiale, **caractérisé par le fait que** le mouvement de transfer de chaque secteur comprend également une composante tangente.

2. Plateau selon la revendication 1, **caractérisé par le fait qu'**il est formé de quatre secteurs (14a, 14b, 14c, 14d, 94a, 94b, 94c, 94d) de **11** dents chacun, qui, en position basse sont adjacents en position basse et présentent entre eux un espace correspondant à un pas de chaîne en position haute.

3. Plateau selon la revendication 1, **caractérisé par le fait que** la composante radiale de la trajectoire d'un secteur est déterminée pour qu'en position haute les secteurs aient entre eux un espace correspondant à un nombre entier de pas de la chaîne, et la composante tangente pour que la première dent (37à) d'un secteur soit sensiblement en coïncidence avec la dernière dent du secteur qui le précède et qui serait en position basse sans pas intermédiaire.

4. Plateau selon la revendication 1, chaque secteur (14a, 14b, 14c, 14d) ayant une zone amont (34a) et une zone aval (36a), **caractérisé par le fait que** l'une des zones (36a) du secteur est guidée par rapport à la rainure par une goupille (41a) circulant à l'intérieur d'une lumière (40a), et qu'au moins un levier basculant (56a) commande le déplacement de l'autre zone du secteur (37a).

5. Plateau selon la revendication 4, **caractérisé par le fait que** le déplacement d'un secteur est commandé par un basculeur unique (53a) ayant une branche (54a) en appui contre une rampe (48a) située à la base du secteur (14a).

6. Plateau selon la revendication 4, **caractérisé par le fait que** chacun des secteurs est rappelé élastiquement en position basse par un ressort de rappel (66a) monté entre le secteur et la monture.

7. Plateau selon la revendication 4, **caractérisé par le fait que** le levier basculant (53a) a deux branches (54a, 55a) portant chacune un taquet (60a, 61a) d'indexation du levier dans l'une ou l'autre de ses positions de commande de déplacement.

8. Plateau selon la revendication 7, **caractérisé par le fait qu'**une biellette (76) prévue pour être montée sur le cadre de la bicyclette commande le basculement du levier en se plaçant sur la trajectoire de l'un ou l'autre des taquets (60a, 61a) d'indexation.

9. Plateau selon la revendication 8, **caractérisé par le fait que** le déplacement de la biellette est commandé par un organe (82) piloté par un système de gestion électronique comprenant un organe de détection de chacun des secteurs (85a, 85b, 85c, 85c, 86) et un circuit de traitement comprenant une unité de comptage et une unité de traitement pour piloter l'organe (82) de déplacement de la biellette.

10. Plateau selon la revendication 1, **caractérisé par le fait que** chacun des secteurs (94a, 94b, 94c, 94d) est fixé à l'extrémité d'un bras (95a, 95b, 95c, 95d) lui-même relié à la branche (97a, 97b, 97c, 97d) radiale d'une monture autour d'un axe (96a, 96b, 96c, 96d) situé au centre instantané de rotation.

11. Plateau selon la revendication 1, **caractérisé par le fait que** le changement de position d'un secteur (105a) est piloté par deux excentriques (106a, 107a), l'un situé dans la zone amont, l'autre dans la zone aval du plateau dont la rotation synchronisée est commandée par un pignon (119a).

12. Plateau selon la revendication 1, **caractérisé par le fait que** le changement de position d'un secteur (120a) est piloté d'un côté par un basculeur (121a) pivotant autour d'un axe (125a) porté par la monture et relié au secteur par une goupille (129a) située à sa tête (128a), et de l'autre côté par un excentrique (122a) pivotant autour d'un axe (132a) porté par la monture et relié au secteur par une goupille (133a), le basculeur (121a) et l'excentrique (122a) étant reliés l'un à l'autre par une biellette de liaison (123a).

13. Plateau selon la revendication 1, **caractérisé par le fait que** son changement d'état induit une variation relativement faible de son développement, de l'ordre de 10%.

14. Plateau selon la revendication 11, **caractérisé par le fait qu'**il a de **44** à **49** dents à l'état de petit diamètre, et qu'à l'état de grand diamètre, il a un développement de 3 à 5 dents supplémentaires.

15. Système de transmission pour une bicyclette comprenant une chaîne de transmission et à l'arrière un ensemble de pignons avec un dérailleur pour transférer la chaîne d'un pignon à l'autre, **caractérisé par le fait qu'**il comprend à l'avant un plateau d'entraînement selon l'une quelconque des revendications précédentes.

16. Système selon la revendication 14, où le dérailleur arrière est un dérailleur à commande électrique, **caractérisé par le fait que** le dérailleur arrière et le plateau Sont commandés par un système électronique de gestion coordonnant les commandes du dérailleur arrière et du plateau.

17. Système selon la revendication 15, **caractérisé par le fait qu'**il comprend à l'avant un plateau extensible entre deux états de **44** et **48** dents, et à l'arrière une cassette de pignons comprenant tout ou partie d'un jeu de pignons de **11, 13, 15, 18, 21, 25, 30, 36** dents.

## Claims

1. Driving sprocket for a bicycle crankset having a toothed ring whose teeth have one pitch in correspondence with one chain pitch, the ring being divided into a plurality of segments (14a, 14b, 14c, 14d, 94a, 94b, 94c, 94d, 105a, 120a), the segments being borne by a frame (16, 98) that is rotationally movable about a crankset axle, each sprocket segment being movable with respect to the frame in a plane perpendicular to the crankset axle between a low position and a high position in which it is further distant from the crankset axle, thus defining a small diameter state and an imaginary large diameter state of the sprocket, a system for transferring each segment to transfer said segment from one position to the other, and an indexing mechanism to control the system for shifting the segments, each segment (14a, 14b, 14c, 14d, 94a, 94b, 94c, 94d, 105a, 120a) being floatingly mounted with respect to the frame (16, 98), and guided in its transfer movement along a trajectory having a radial component, **characterized in that** the transfer movement of each segment also comprises a tangent component.

2. Sprocket according to claim 1, **characterized in that** it is formed of four segments (14a, 14b, 14c, 14d, 94a, 94b, 94c, 94d) of **11** teeth each, which, in the low position, are adjacent in the low position and have between them a space corresponding to one chain pitch in the high position.

3. Sprocket according to claim 1, **characterized in that** the radial component of the trajectory of a segment is determined such that in the high position the segments have between them a space corresponding to a whole number of a chain pitch, and the tangent component such that the first tooth (37a) of a segment is substantially in correspondence with the last tooth of the segment preceding it and which would be in the low position without an intermediary pitch.

4. Sprocket according to claim 1, each segment (14a, 14b, 14c, 14d) having a forward zone (34a) and a rearward zone (36a), **characterized in that** one of the zones (36a) of the segment is guided with respect to the groove by a pin (41 a) moving inside of a slot (40a), and **in that** at least one shifting lever (56a) controls the displacement of the other zone of the segment (37a).

5. Sprocket according to claim 4, **characterized in that** the displacement of a segment is controlled by a single shifter (53a) having an arm (54a) supported against a ramp (48a) located at the base of the segment (14a).

6. Sprocket according to claim 4, **characterized in that** each of the segments is elastically returned to the low position by a return spring (66a) mounted between the segment and the frame.

7. Sprocket according to claim 4, **characterized in that** the shifting lever (53a) has two arms (54a, 55a), each bearing a stop (60a; 61a) for indexing the lever in one or the other of its positions for controlling the displacement.

8. Sprocket according to claim 7, **characterized in that** a connecting rod (76) provided to be mounted on the bicycle frame controls the shifting of the lever by positioning itself on the trajectory of one or the other of the indexing stops (60a, 61a).

9. Sprocket according to claim 8, **characterized in that** the displacement of the connecting rod is controlled by a member (82) that is guided by an electronic control system having a member for detecting each of the segments (85a, 85b, 85c, 85c, 86), and a processing circuit having a counting unit and a processing unit to guide the member (82) for displacing the connecting rod.

10. Sprocket according to claim 1, **characterized in that** each of the segments (94a, 94b, 94c, 94d) is affixed to the end of an arm (95a, 95b, 95c, 95d) that is itself connected to the radial arm (97a, 97b, 97c, 97d) of a frame about an axle (96a, 96b, 96c, 96d) located at the instantaneous center of rotation.

11. Sprocket according to claim 1, **characterized in that** the change of position of a segment (105a) is guided by two cams (106a, 107a), one located in the forward zone, the other in the rearward zone of the sprocket, whose synchronized rotation is controlled by a pinion (119a).

12. Sprocket according to claim 1, **characterized in that** the change of position of a segment (120a) is guided on one side by a shifter (121a) pivoting about an axle (125a) borne by the frame and connected to the segment by a pin (129a) located at its head (128a), and on the other side by a cam (122a) pivoting about an axle (132a) borne by the frame and connected to the segment by a pin (133a), the shifter (121 a) and the cam (122a) being connected to one another by a connecting rod (123a).

13. Sprocket according to claim 1, **characterized in that** its change of state induces a relatively small variation of its expansion, on the order of 10%.

14. Sprocket according to claim 11, **characterized in that** it has from 44 to 49 teeth in a small diameter state, and that in a large diameter state, it has an expansion of 3 to 5 additional teeth.

15. Transmission system for a bicycle having a transmission chain and, at the rear, a set of pinions with a derailleur to transfer the chain from one pinion to the other, **characterized in that** it has a driving sprocket at the front, according to any one of the preceding claims.

16. System according to claim 14, where the rear derailleur is an electrically controlled derailleur, **characterized in that** the rear derailleur and the sprocket are controlled by an electronic control system coordinating the controls of the rear derailleur and of the sprocket.

17. System according to claim 15, **characterized in that** it has at the front a sprocket that is extensible between two states of **44** and **48** teeth, and at the rear a cassette of pinions having all or part of a set of pinions of **11, 13,15,18, 21, 25, 30, 36** teeth.

## Patentansprüche

1. Antriebsscheibe für eine Tretkurbel eines Zweirades, aufweisend ein mit Zähnen versehenes Rad, dessen Zahnung eine Teilung in Übereinstimmung mit einer Teilung einer Kette aufweist, wobei das Rad in eine Mehrzahl an Sektoren (14a, 14b, 14c, 14d, 94a, 94b, 94c, 94d, 105a, 120a) unterteilt ist, wobei die Sektoren von einem Träger (16, 98) getragen werden, welcher in Drehung um eine Achse der Tretkurbel beweglich ist, wobei jeder Sektor der Scheibe relativ zu dem Träger in einer Ebene senkrecht zu der Achse der Tretkurbel zwischen einer tiefen Position und einer hohen Position, in welcher er mehr von der Achse der Tretkurbel entfernt ist, beweglich ist, wobei so ein Zustand von kleinem Durchmesser und ein fiktiver Zustand von großem Durchmesser der Scheibe definiert wird, ein System zum Überfuhren jedes Sektors, um den Sektor von einer Position zu der anderen zu überführen, und einen Indexierungsmechanismus zum Steuern des Systems zur Umschaltung der Sektoren, wobei jeder Sektor (14a, 14b, 14c, 14d, 94a, 94b, 94c, 94d, 105a, 120a) lose bzw. schwimmend im Verhältnis zu dem Träger (16, 98) montiert ist und in seiner Überführungsbewegung gemäß einer Laufbahn geführt ist, welche eine radiale Komponente umfasst, **dadurch gekennzeichnet, dass** die Überführungsbewegung jedes Sektors ebenfalls eine Tangens-Komponente aufweist.

2. Scheibe nach Anspruch 1, **dadurch gekennzeichnet, dass** sie aus vier Sektoren (14a, 14b, 14c, 14d, 94a, 94b, 94c, 94d) von 11 Zähnen jeweils gebildet ist, welche in tiefer Position angrenzend zueinander sind in tiefer Position und untereinander einen Abstand entsprechend zu einer Teilung der Kette in hoher Position aufweisen.

3. Scheibe nach Anspruch 1, **dadurch gekennzeichnet, dass** die radiale Komponente der Laufbahn eines Sektors und die Tangens-Komponente festgelegt ist, damit die Sektoren in hoher Position untereinander einen Abstand entsprechend zu einer ganzen Zahl der Teilung der Kette aufweisen, damit der erste Zahn (37a) eines Sektors im Wesentlichen mit dem letzten Zahn des Sektors, welcher ihm vorhergeht und welcher in tiefer Position ohne Zwischenteilung bzw. Zwischenschritt sein wird, zusammenfallend ist.

4. Scheibe nach Anspruch 1, wobei jeder Sektor (14a, 14b, 14c, 14d) eine aufwärtsgerichtete Zone (34a) und eine abwärtsgerichtete Zone (36a) aufweist, **dadurch gekennzeichnet, dass** die eine der Zonen (36a) des Sektors im Verhältnis zu der Nut durch einen Stift (41 a) geführt wird, welcher im Inneren eines Langlochs (40a) läuft, und dass zumindest ein kippbarer Hebel (56a) die Verstellung von der anderen Zone des Sektors (37a) steuert.

5. Scheibe nach Anspruch 4, **dadurch gekennzeichnet, dass** die Verstellung eines Sektors über ein einziges Kippelement (53a) gesteuert wird, welches einen Ast (54a) in Anlage gegen eine Rampe (48a) hat, die an der Basis des Sektors (14a) angeordnet ist.

6. Scheibe nach Anspruch 4, **dadurch gekennzeichnet, dass** jeder der Sektoren durch eine Rückstellfeder (66a), welche zwischen dem Sektor und dem Träger montiert ist, elastisch in die tiefe Position zurückgestellt ist.

7. Scheibe nach Anspruch 4, **dadurch gekennzeichnet, dass** der kippbare Hebel (53a) zwei Äste (54a, 55a) aufweist, von denen jeder einen Mitnehmer (60a, 61a) zur Indexierung des Hebels in der einen oder der anderen seiner Steuerpositionen zur Verstellung trägt.

8. Scheibe nach Anspruch 7, **dadurch gekennzeichnet, dass** ein Schwingarm (76), welcher vorgesehen ist, um auf dem Rahmen des Zweirades montiert zu sein, die Kippbewegung des Hebels unter einem Sichverstellen auf der Laufbahn des einen oder des anderen der Mitnehmer (60a, 61a) zur Indexierung steuert.

9. Scheibe nach Anspruch 8, **dadurch gekennzeichnet, dass** die Verstellung des Schwingarms durch ein Bauteil (82) gesteuert wird, welches über ein elektronisches Verwaltungssystem angesteuert wird, das ein Erfassungsbauteil von jedem der Sektoren (85a, 85b, 85c, 85d, 86) und einen Behandlungsschaltkreis aufweist, welcher eine Zähleinheit und eine Behandlungseinheit zum Ansteuern des Bauteils (82) zur Verstellung des Schwingarms aufweist.

10. Scheibe nach Anspruch 1, **dadurch gekennzeichnet, dass** jeder der Sektoren (94a, 94b, 94c, 94d) an dem Ende eines Arms (95a, 95b, 95c, 95d) befestigt ist, der selbst mit dem radialen Ast (97a, 97b, 97c, 97d) eines Trägers um eine Achse (96a, 96b, 96c, 96d) verbunden ist, welche im augenblicklichen Drehzentrum angeordnet ist.

11. Scheibe nach Anspruch 1, **dadurch gekennzeichnet, dass** der Wechsel der Position eines Sektors (105a) durch zwei Exzenterteile (106a, 107a) angesteuert wird, wobei das eine in der aufwärts gelegenen bzw. aufwärtsgerichteten Zone angeordnet ist und das andere in der abwärtsgerichteten Zone der Scheibe angeordnet ist, deren synchronisierte Drehung durch ein Ritzel (119a) gesteuert wird.

12. Scheibe nach Anspruch 1, **dadurch gekennzeichnet, dass** der Wechsel der Position eines Sektors (120a) von einer Seite über ein Kippelement (121a) angesteuert wird, welches um eine Achse (125a) schwenkt, die durch den Träger getragen wird und welche mit dem Sektor über einen Stift (129a) verbunden ist, welcher an seinem Kopf(128a) angeordnet ist, und von der anderen Seite über ein Exzenterteil (122a), welches um eine Achse (132a) schwenkt, welche durch den Träger getragen wird und welche mit dem Sektor über einen Stift (133a) verbunden ist, wobei das Kippelement (121 a) und das Exzenterteil (122a) miteinander über einen Verbindungsschwingarm (123a) verbunden sind.

13. Scheibe nach Anspruch 1, **dadurch gekennzeichnet, dass** ihr Wechsel des Zustands eine relativ geringe Variation ihrer Entwicklung bzw. ihrer Übersetzung, in der Größenordnung von 10 %, hervorruft.

14. Scheibe nach Anspruch 11, **dadurch gekennzeichnet, dass** sie 44 bis 49 Zähne im Zustand von kleinem Durchmesser aufweist und dass sie in dem Zustand von großem Durchmesser eine Entwicklung bzw. Übersetzung von 3 bis 5 zusätzlichen Zähnen aufweist.

15. Übersetzungssystem für ein Zweirad, aufweisend eine Übersetzungskette und hinten eine Gesamtheit an Ritzeln mit einem Gangversteller zum Überführen der Kette von einem Ritzel zu dem anderen, **dadurch gekennzeichnet, dass** es vorne eine Antriebsscheibe nach irgendeinem der vorangegangenen Ansprüche aufweist.

16. System nach Anspruch 15, in welchem der hintere Gangversteller ein Gangversteller mit elektrischer Steuerung ist, **dadurch gekennzeichnet, dass** der hintere Crangversteller und die Scheibe durch ein elektronisches Verwaltungssystem gesteuert werden, welches die Befehle des hinteren Gangverstellers und der Scheibe koordiniert.

17. System nach Anspruch 15, **dadurch gekennzeichnet, dass** es vorne eine Scheibe aufweist, welche zwischen zwei Zuständen von 44 und 48 Zähnen erweiterbar ist, und hinten eine Kassette an Ritzeln, welche vollständig oder teilweise einen Satz an Ritzeln von 11, 13, 15, 18, 21, 25; 30, 36 Zähnen atzfweist.
